# EUROPEAN PATENT SPECIFICATION

(11) **EP 3 165 889 B1**
(45) Date of publication and mention of the grant of the patent: **08.01.2020**
(21) Application number: 15814139.0
(22) Date of filing: 05.06.2015
(51) Int. Cl.: G01M 3/20

(54) **METHOD FOR TESTING CONTAINER SEALING AND ASSISTANCE DEVICE**
VERFAHREN ZUM TESTEN EINER BEHÄLTERVERSIEGELUNG UND HILFSVORRICHTUNG
PROCÉDÉ DE TEST D'ÉTANCHÉITÉ DE RÉCIPIENT ET DISPOSITIF D'ASSISTANCE

(30) Priority: 03.07.2014 JP 2014137899
(43) Date of publication of application: 10.05.2017
(73) Proprietor: Suntory Holdings Limited, Osaka-shi, Osaka 530-8203 (JP)
(72) Inventor: MURASE Tatsuya, Tokyo 135-8631 (JP); KOBAYASHI Toshiya, Tokyo 135-8631 (JP); TAKANO Riki, Tokyo 135-8631 (JP)
(74) Representative: Vossius & Partner Patentanwälte Rechtsanwälte mbB
(86) International application number: PCT/JP2015/066295
(87) International publication number: WO 2016/002429

(56) References cited:
- JP-A- H02 186 232
- JP-A- 2001 122 317
- JP-A- 2001 122 317
- JP-A- 2002 134 164
- JP-A- 2006 162 483
- JP-B2- 3 868 894
- JP-B2- H07 113 592

## Description

### Technical Field

The present invention relates to a method for inspecting the sealing performance of a mouth portion of a container such as a PET bottle and a seal included in a cap that is screwable on the mouth portion, and to an auxiliary apparatus for executing some of steps of the inspection method.

### Background Art

As a cap that is to be screwed on a mouth portion of a container such as a PET bottle, a cap obtained by integrally forming, with a resin, a top face portion, a tubular portion that extends downward from a circumferential edge of the top face portion, a seal (referred to as an outer seal, hereinafter) that is formed on an inner surface of the top face portion and comes into contact with an outer circumferential surface of the mouth portion of the container, and a seal (referred to as an inner seal, hereinafter) that is also formed on the inner surface of the top face portion, such that a vertical length from the top face portion is longer than that of the outer seal, and comes into contact with an inner circumferential surface of the mouth portion, the cap sealing the mouth portion through the outer seal and the inner seal sandwiching the mouth portion, is widely used.

From the viewpoint of maintaining the quality of the content, for example, the outer seal and the inner seal that are included in the cap, and, in particular, the inner seal, need to have reliable sealing performance at least in a state in which the cap is unopened.

A method in which, after a container is filled with liquid that is the content and is sealed with the cap, the container is left in a state in which the cap is located downward, and whether the liquid in the container leaks to the outside is checked is known as a method for inspecting the sealing performance of the outer seal and the inner seal that are included in the cap. Note that this inspection method is a conventional technique described in Patent Document 1, and thus is not shown in prior art documents such as patent documents.

Patent Document 1 proposes a technique in which the vicinity of a sealing portion included in a cap is made of a non-conductive material, a central portion and a peripheral portion of the cap that sandwich the sealing portion are made of a conductive material, and leakage of the content is detected based on a flow of an electrical current between the central portion and the peripheral portion that are made of the conductive material.

Also, Patent Document 2 proposes a technique for inspecting the sealing performance in which a bottle to which a cap portion that is integrally formed with an inner ring portion that seals a bottle mouth portion is fitted is cut at its neck portion, an ultrasonic sensor for inspection is inserted from an end that is opened by this cut into the mouth portion to which the cap portion is fitted, and is oriented at a position for inspecting a sealing portion formed by the inner ring portion, and scanning is performed under predetermined conditions to obtain an echo image of the sealing portion.

### Prior Art Documents

### Patent Documents

Patent Document 1: Japanese Patent No. 4301533
Patent Document 2: Japanese Patent No. 3868894

### Disclosure of the Invention

### Problem to be Solved by the Invention

However, the above-described conventional inspection methods have been problematic in that even if the inner seal does not have sealing performance, if the outer seal has sealing performance, liquid does not leak, and thus the sealing performance of the inner seal that is required to have reliable sealing performance cannot be appropriately evaluated.

The technique in Patent Document 1 is problematic in that all caps need be made conductive or non-conductive depending on the part thereof, thus incurring unnecessary cost.

In particular, in a case where a cap or a mouth portion is newly designed when a new PET bottle drink product is developed or an existing product is improved, for example, the sealing performance of the cap is evaluated, and the newly designed cap or mouth portion is adopted, a highly costly cap that is the same as the cap that has been adopted needs to be manufactured, despite not thereafter individually evaluating the sealing performance with regard to the PET bottle drink that is distributed as product.

In the technique in Patent Document 2, the neck portion is cut to perform inspection, and thus the influence that the inner pressure exerts on the inner surface of the cap portion and the inner surface of the neck portion, and, in particular, on the inner ring portion, when a PET bottle is unopened are excluded.

For example, in the case where a PET bottle drink is filled by hot-pack filling, it was impossible to judge the influence of a change in the internal pressure caused by a temperature change of the drink in the PET bottle, or the influence of an impact when the PET bottle drink is dropped into a product removal port from a stocker when selling the PET bottle drink in a vending machine. That is, a difference in evaluation results for sealing performance could possibly occur, for example, between the unopened cap under inspection and the unopened cap of, for example, a PET bottle drink that is actually distributed.

The present invention is for solving the above-described problems and an object thereof is to provide a highly reliable method for inspecting the sealing performance of a container, and an auxiliary apparatus with which some of the steps of the inspection method can be executed without requiring skills.

In order to achieve the above-described object, a first characteristic configuration of an inspection method according to the present invention is a method for inspecting a sealing performance of a mouth portion of a container filled with a liquid and a cap including a top face portion, a tubular portion that extends downward from a circumferential edge of the top face portion and has an inner circumferential surface provided with a thread portion for screwing on an outer circumferential surface of the mouth portion, a resin outer seal that is formed on an inner surface of the top face portion and comes into contact with the outer circumferential surface of the mouth portion, and a resin inner seal that is formed on the inner surface of the top face portion and comes into contact with the inner circumferential surface of the mouth portion, the inspection method including a first drilling step of forming, in the top face portion included in the cap screwed on the mouth portion of the container, a first hole that is in communication with a first space defined by a circumferential edge portion of the mouth portion and the inner seal and the outer seal that are included in the cap, a first injecting step of injecting a dye into the first space via the first hole, a first pressurizing step of applying an internal pressure to the cap of the container into which the dye has been injected in the first injecting step, a first checking step of checking whether or not the dye leaks into the container after the first pressurizing step, and an evaluating step of evaluating the sealing performance based on a checking result of the first checking step.

For example, if the dye that has been injected into the first space leaks into the container via the inner seal due to poor sealing performance of the inner seal, the color of the liquid in the container changes due to influence of the dye, and thus whether or not the dye leaks can be easily checked visually. It is possible to reliably evaluate the sealing performance of the inner seal of the cap in a state in which the inner portion of the container is filled with liquid that serves as the content. In particular, various pressures caused by physical impact when products are distributed or sold, and the ambient environment such as a change in temperature or pressure, for example, act on the containers that are distributed as products. In the first pressurizing step, the reliability of the inspection result can be improved by evaluating the sealing performance of the cap of the container that is the inspection target with a predetermined internal pressure being applied to the cap.

Note that preferred examples of the first pressurizing step include a first leaving step of leaving the container into which the dye has been injected in the first injecting step, in a state in which the container is inverted, and a first applying step of applying a predetermined external force to the container into which the dye has been injected in the first injecting step. "Applying an external force" means carrying out an operation so that the internal pressure of the container increases, such as dropping, gripping, or heating the container.

The number of containers in which the first hole that is in communication with the first space defined by the inner seal, the outer seal, and the circumferential edge portion of the mouth portion of the container is formed in the top face portion of the cap is not limited to one, and may be greater than one.

A second characteristic configuration of the same includes a second drilling step of forming, in a tubular portion included in a cap screwed on a mouth portion of another container that is different from the container, a second hole that is in communication with a second space defined by at least an outer seal and an inner circumferential surface of the tubular portion that are included in the cap and an outer circumferential portion of the mouth portion, a second injecting step of injecting a dye into the second space via the second hole, a second pressurizing step of applying an internal pressure to the cap of the other container into which the dye has been injected in the second injecting step, and a second checking step of checking whether or not the dye leaks into the other container after the second pressurizing step, and in the evaluating step, the sealing performance is evaluated based on checking results of the first checking step and the second checking step.

If the dye that has been injected into the second space leaks into the other container, it can be evaluated that the outer seal and the inner seal have poor sealing performance. Even if it is evaluated in the first checking step that the inner seal has poor sealing performance, in the case where the dye that has been injected into the second space does not leak into the other container, it can be evaluated that the outer seal has good sealing performance. Other than locations into which the dye is injected, similar steps are performed on the container in which the dye has been injected into the first space and the container in which the dye has been injected to the second space, and thus the reliability of the results increases.

Note that preferred examples of the second pressurizing step include a second leaving step of leaving the other container in a state in which the other container is inverted and a second applying step of applying a predetermined external force to the other container, and are preferably steps similar to the first pressurizing step.

The number of containers in which the second hole that is in communication with the second space defined by at least the outer seal and the inner circumferential surface of the tubular portion of the cap, and the outer circumferential portion of the mouth portion is formed in the tubular portion of the cap is not limited to one, and may be greater than one, and is preferably the same in number as the containers provided with the first hole.

In a third characteristic configuration of the same, the first pressurizing step includes at least a first leaving step of leaving the container in a state in which the container is inverted, or a first applying step of applying a predetermined external force to the container.

In a fourth characteristic configuration of the same, the first pressurizing step includes at least a first leaving step of leaving the container in a state in which the container is inverted, or a first applying step of applying a predetermined external force to the container, and the second pressurizing step includes at least a second leaving step of leaving the other container in a state in which the other container is inverted, or a second applying step of applying a predetermined external force to the other container.

In a fifth characteristic configuration of the same, the container is filled with the liquid by hot-pack filling.

Hot-pack filling for filling the container with a liquid that has been sterilized by heating, at a high temperature, and aseptic filling for sterilizing the liquid at high temperature in advance, and then filling the container at room temperature in a sterile state after cooling the liquid are widely used in filling a container with a liquid.

In hot-pack filling, the cap is closed in a state in which the content is hot, and the container is immediately cooled with cold shower after filling, and when the liquid subsequently returns to room temperature, the volume of an air portion in the container decreases and the inside of the container achieves a negative pressure, and thus the sealing performance of the inner seal is regarded as more important.

However, when hot-pack filling is performed, the heat of the liquid that fills the container is conveyed to the cap, the inner seal and the outer seal that are made of a resin are warmed, and when they subsequently return to room temperature, there is a possibility that the inner seal will contract in a direction away from the inner circumferential surface of the mouth portion. Also, although the outer seal contracts in a direction more closely contacting the outer circumferential surface of the mouth portion, the outer seal is designed to be shorter than the inner seal, and thus is often in unstable contact with the mouth portion.

The inspection method according to the present invention is suitably used on a container that is filled with a liquid by hot-pack filling, and makes it possible to evaluate a cap of the container, and, in particular, the inner seal, with high reliability.

A first characteristic configuration of an auxiliary apparatus according to the present invention is an auxiliary apparatus for executing the first drilling step and the first injecting step that are included in the inspection method having the above-described first or third characteristic configuration, the apparatus including a holding portion that holds the container that is filled with the liquid, a drilling portion that forms a hole having a predetermined depth in the cap that is screwed on the mouth portion of the container held by the holding portion and includes the top face portion, the tubular portion that extends downward from the circumferential edge of the top face portion and has the inner circumferential surface provided with the thread portion for screwing on the outer circumferential surface of the mouth portion, the resin outer seal that is formed on the inner surface of the top face portion and comes into contact with the outer circumferential surface of the mouth portion, and the resin inner seal that is formed on the inner surface of the top face portion and comes into contact with the inner circumferential surface of the mouth portion, an injection portion that is disposed in parallel with the drilling portion and injects a predetermined amount of the dye into the hole, a first support portion that supports at least the holding portion, or the drilling portion and the injection portion so as to be relatively movable at least between the drilling portion and the injection portion in a first direction that extends along a direction in which the drilling portion and the injection portion are disposed in parallel with each other, and a second support portion that supports at least the holding portion, or the drilling portion and the injection portion so as to be relatively movable in a second direction orthogonal to the first direction in a horizontal plane, at least between a drilling position at which the drilling portion drills the hole and an injection position at which the injection portion injects the dye into the hole, and a separation position at which the drilling portion and the injection portion are separated from the cap, the holding portion including a first holding portion that holds the container at a horizontal orientation such that the top face portion included in the cap faces the drilling portion or the injection portion, and the drilling portion is configured to form, in the top face portion included in the cap screwed on the mouth portion of the container held by the first holding portion, the first hole that is in communication with the first space defined by the circumferential edge portion of the mouth portion and the inner seal and the outer seal that are included in the cap.

In the first drilling step or the first injecting step that is included in the inspection method according to the present invention, when there is variation in the position or depth of the hole formed in the cap, or the injection amount of the dye, there is a possibility that variation will occur in inspection results. According to the above-described auxiliary apparatus, anyone can easily perform the skilled work of forming the first hole having a predetermined depth at a predetermined position of the top face portion of the cap. Because variation in the position and depth of the hole formed in the container that is an inspection target can be reduced, the reliability of the inspection results can be improved.

A second characteristic configuration of the same is an auxiliary apparatus for executing the first and second drilling steps and the first and second injecting steps that are included in the inspection method having the above-described second or fourth characteristic configuration, the apparatus including a holding portion that holds the container that is filled with the liquid, a drilling portion that forms a hole having a predetermined depth in the cap that is screwed on the mouth portion of the container held by the holding portion and includes the top face portion, the tubular portion that extends downward from the circumferential edge of the top face portion and has the inner circumferential surface provided with the thread portion for screwing on the outer circumferential surface of the mouth portion, the resin outer seal that is formed on the inner surface of the top face portion and comes into contact with the outer circumferential surface of the mouth portion, and the resin inner seal that is formed on the inner surface of the top face portion and comes into contact with the inner circumferential surface of the mouth portion, an injection portion that is disposed in parallel with the drilling portion and injects a predetermined amount of the dye into the hole, a first support portion that supports at least the holding portion, or the drilling portion and the injection portion so as to be relatively movable at least between the drilling portion and the injection portion in a first direction that extends along a direction in which the drilling portion and the injection portion are disposed in parallel with each other, and a second support portion that supports at least the holding portion, or the drilling portion and the injection portion so as to be relatively movable in a second direction orthogonal to the first direction in a horizontal plane, at least between a drilling position at which the drilling portion drills the hole and an injection position at which the injection portion injects the dye into the hole, and a separation position at which the drilling portion and the injection portion are separated from the cap, the holding portion including a first holding portion that holds the container at a horizontal orientation such that the top face portion included in the cap faces the drilling portion or the injection portion, and a second holding portion that holds the other container that is different from the container held by the first holding portion at a perpendicular orientation such that the tubular portion included in the cap faces the drilling portion or the injection portion, the drilling portion is configured to form, in the top face portion included in the cap screwed on the mouth portion of the container held by the first holding portion, the first hole that is in communication with the first space defined by the circumferential edge portion of the mouth portion and the inner seal and the outer seal that are included in the cap, and forming, in the tubular portion included in the cap screwed on the mouth portion of the other container held by the second holding portion, the second hole that is in communication with the second space defined by at least the outer seal and the inner circumferential surface of the tubular portion that are included in the cap and the outer circumferential portion of the mouth portion.

In the first drilling step and the second drilling step or the first injecting step and the second injecting step that are included in the inspection method according to the present invention, if there is variation in the position or depth of the hole formed in the cap, or the injection amount of the dye, there is a possibility that variation will occur in inspection results. According to the above-described auxiliary apparatus, anyone can easily perform the skilled work of forming the first hole having a predetermined depth at a predetermined position of the top face portion of the cap, or of forming the second hole having a predetermined depth at a predetermined position of the tubular portion of the cap. Because variation in the position and depth of the hole formed in the container that is an inspection target can be reduced, the reliability of the inspection results can be improved.

Moreover, in the auxiliary apparatus, the holding portion preferably includes a fixing portion that fixes the first holding portion and the second holding portion in parallel with each other at a distance that is equal to a distance at which the drilling portion and the injection portion are disposed in parallel with each other, along the first direction, and the first holding portion and the second holding portion can be integrally moved due to the fixing portion.

Moreover, in the auxiliary apparatus, the first support portion preferably includes a restriction portion that restricts the relative movement of the holding portion in the first direction at a position that faces the drilling portion or a position that faces the injection portion, and can fix the container with the restriction portion to a predetermined position that faces the drilling portion or a predetermined position that faces the injection portion when the hole is formed or the dye is injected, and thus drilling work or injection work is facilitated.

### Brief Description of the Drawings

FIG. 1 is an illustrative diagram showing a first embodiment of an auxiliary apparatus of the present invention.
FIG. 2 is an illustrative diagram showing a second embodiment of the auxiliary apparatus of the present invention.

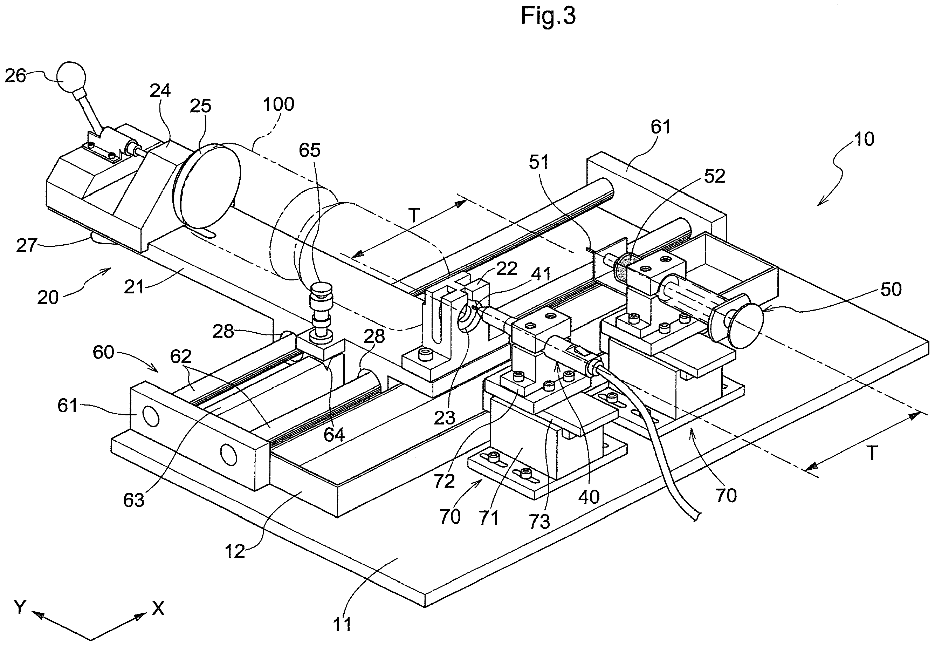

FIG. 3 is an illustrative diagram showing a first drilling step.

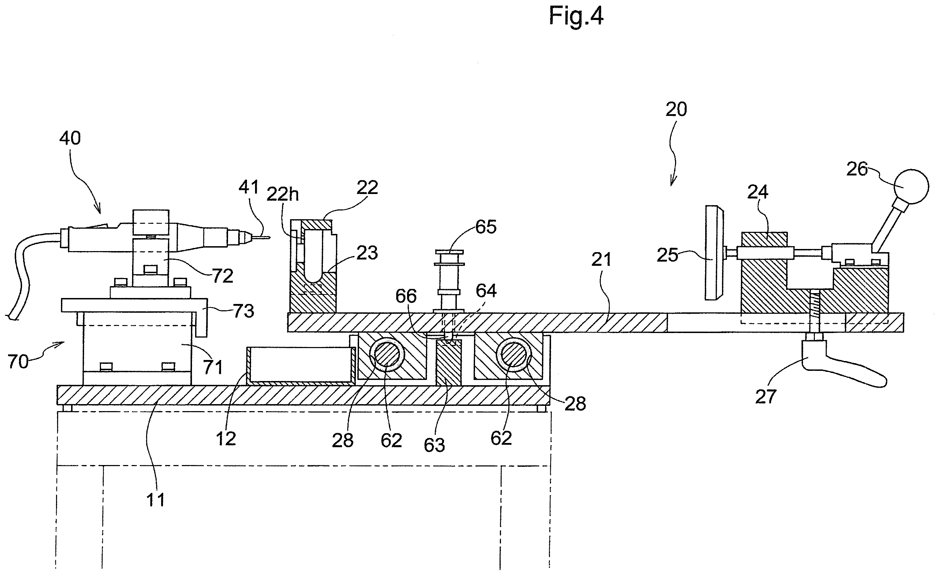

FIG. 4 is a side view of the auxiliary apparatus of the first embodiment.
FIG. 5 is an illustrative diagram showing the first drilling step.

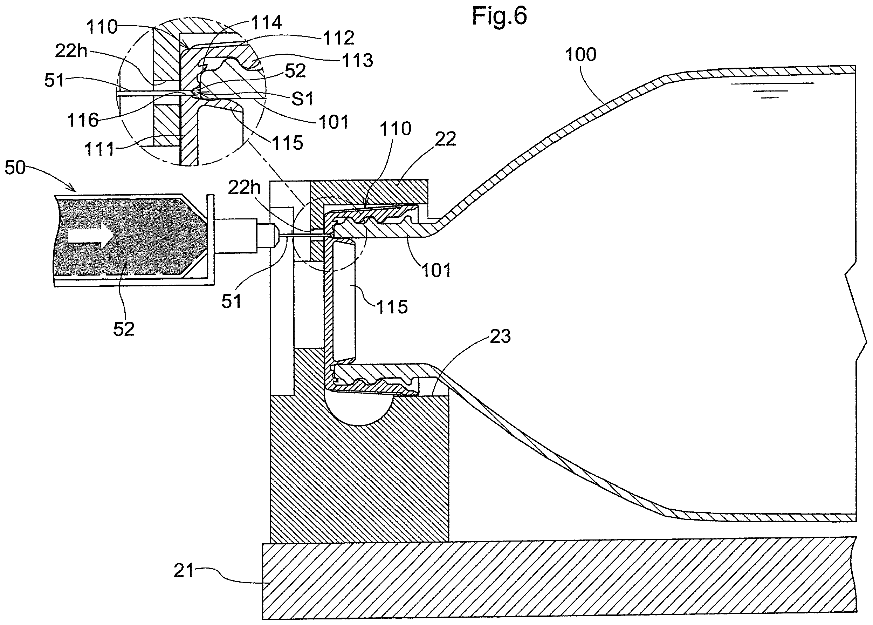

FIG. 6 is an illustrative diagram showing a first injecting step.
FIG. 7 is an illustrative diagram showing an applying step and a leaving step.
FIG. 8 is an illustrative diagram showing a second drilling step.
FIG. 9 is an illustrative diagram showing a second injecting step.
FIG. 10 is an illustrative diagram showing the second injecting step.

### Best Mode for Carrying out the Invention

Hereinafter, embodiments of a method for inspecting the sealing performance of a container and an auxiliary apparatus according to the present invention will be described.

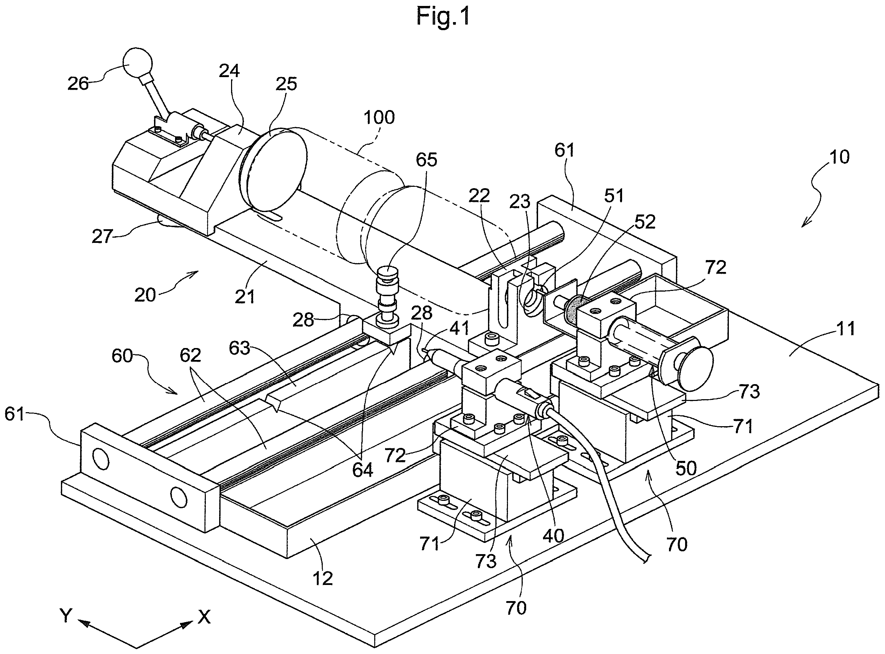

FIG. 1 shows an auxiliary apparatus 10 according to a first embodiment of the present invention.

The auxiliary apparatus 10 includes, on a substrate 11, a holding portion 20 that holds, at a horizontal orientation, a container 100 on which a cap 110 is screwed, an electric drill 40 having a drill bit 41 as one example of the drilling portion, and a syringe 50 having an injection needle 51 as one example of the injection portion, toward the cap 110 of the container 100 held by the holding portion 20. A preferred example of the container 100 is a PET bottle. Note that "container 100" may refer to only a main body of the container 100, or may refer to the entire container 100 having the cap 110 screwed on a mouth portion 101 thereof.

Also, the container 100 that is filled by hot-pack filling with a liquid that is the content will be described as an example.

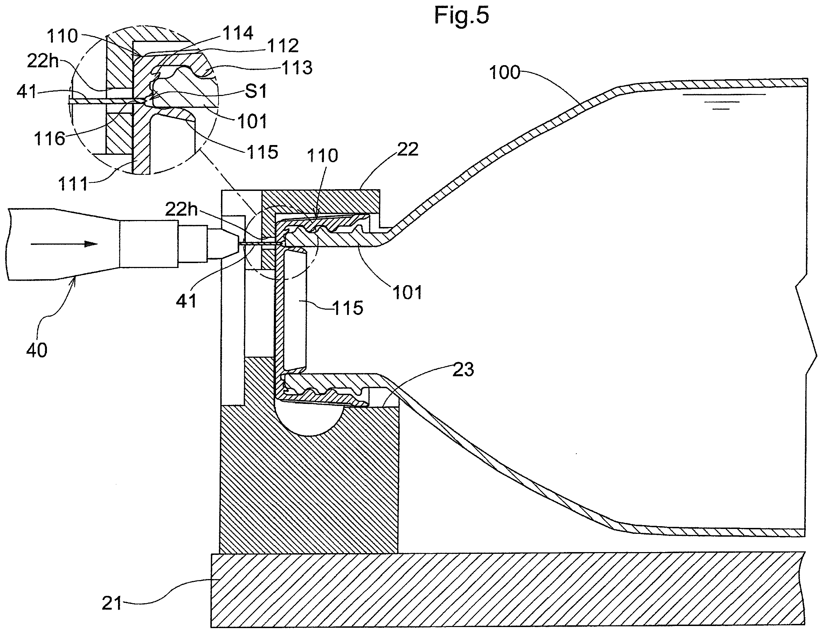

As shown in FIG. 5, the cap 110 includes a top face portion 111, a tubular portion 112 that extends downward from a circumferential edge of the top face portion 111 and has an inner circumferential surface provided with a thread portion 113 for screwing on an outer circumferential surface of the mouth portion 101, an outer seal 114 that is formed on an inner surface of the top face portion 111 and comes into contact with the outer circumferential surface of the mouth portion 101, and an inner seal 115 that is formed similarly to the outer seal 114 on the inner surface of the top face portion 111 and comes into contact with the inner circumferential surface of the mouth portion 101. In the present embodiment, the cap 110 is a pilferproof cap whose entirety is integrally molded with a resin. Note that a tamper-evidence band is omitted in FIG. 5 for simplification of illustration.

Configurations of portions of the auxiliary apparatus 10 will be described in detail.

The holding portion 20 includes, on a front (in a direction in which the holding portion 20 faces the syringe 50 along a Y direction (a second direction) in FIG. 1) upper surface of a flat-plated base portion 21, a cap fixing portion 22 into which the cap 110 of the container 100 is insertable such that the top face portion 111 faces the front, a pressing table 24 provided with a pressing portion 25 that can press a bottom surface of the container 100 toward the front, on a rear upper surface of the base portion 21, and on a front back surface of the base portion 21, a pair of rail guides 28 and 28 for moving along a pair of rails 62 and 62 that are arranged along an X direction (a first direction) between bases 61 and 61 of a support portion 60 that are arranged on the substrate 11 of the auxiliary apparatus 10, and the like.

That is, the holding portion 20 constitutes a first holding portion that holds the container 100 at a horizontal orientation such that the top face portion 111 of the cap 110 faces the drill bit 41 or the injection needle 51, and the support portion 60 constitutes a first support portion that supports the holding portion 20 so as to be relatively movably in the X direction along a direction in which the drill 40 and the syringe 50 are disposed in parallel with each other at least between the drill 40 and the syringe 50.

The cap fixing portion 22 includes a cap fixing hole 23 into which the cap 110 is insertable from the rear, and a guide hole 22h (see FIG. 5) at a position corresponding to a predetermined position of the cap 110 that is inserted into the cap fixing hole 23. The drill bit 41 and the injection needle 51 are reliably guided by the guide hole 22h to the predetermined position of the cap 110.

Note that as shown in FIG. 5, for example, the predetermined position of the cap 110 refers to a position of the top face portion 111 of the cap 110 that can be in communication with a first space S1 defined by the inner seal 115 and the outer seal 114 of the cap 110, and the circumferential edge portion of the mouth portion 101.

A long hole that passes through the front and back of the base portion 21 along a Y direction is formed at a rear center of the base portion 21, and the pressing table 24 is linked with a movement lever 27 that is arranged on a lower surface of the base portion 21 via a stud bolt that is inserted into the long hole. If the stud bolt is loosen by rotating the movement lever 27, the pressing table 24 can move along the Y direction with respect to the base portion 21, and if the stud bolt is fastened by rotating the movement lever 27, the pressing table 24 is fixed to the base portion 21. The distance between the pressing table 24 and the cap fixing portion 22 can be changed in accordance with the size of the container 100 held in this manner.

The pressing table 24 includes a pressing portion 25 that can move back and forth along the Y direction, in response to an operation of a pressing lever 26. After the pressing table 24 is moved to an appropriate position with respect to the container 100 in which the cap 110 has been inserted into the cap fixing portion 22, the pressing lever 26 is operated to press the bottom portion of the container 100 frontward with the pressing portion 25, as a result of which the container 100 is reliably held between the cap fixing portion 22 and the pressing table 24.

A positioning member 63 is arranged between the pair of rails 62 and 62. V-shaped locking notches 64 and 64 are formed in a top face of the positioning member 63 at two locations that are spaced from each other at a predetermined interval T.

An extending portion for arranging a locking pin 65 in the X direction is provided at a position of the base portion 21 that corresponds to the positioning member 63, and the locking pin 65 having a lower end portion 66 that can be locked to the locking notches 64 and 64 is disposed upright on the extending portion. Movement of the base portion 21 in the X direction is restricted by the lower end portion 66 of the locking pin 65 being locked to the locking notch 64, and movement of the base portion 21 in the X direction is allowed due to release of locking by separating the lower end portion 66 of the locking pin 65 from the locking notch 64.

That is, the locking notches 64 and 64 of the positioning member 63 and the locking pin 65 that locks to the locking notches 64 and 64 and is included in the holding portion 20 constitute a restriction portion that restricts the relative movement of the holding portion 20 in the X direction at a position corresponding to the drill bit 41 or a position facing the injection needle 51.

Moreover, support portions 70 and 70 for supporting the drill 40 and the syringe 50 are arranged on the substrate 11. The support portion 70 includes a base portion 71 that is fixed to the substrate 11, a holding portion 72 that holds the drill 40 and the syringe 50, and a sliding portion 73 that allows the holding portion 72 to slide in a back-and-forth direction along the Y direction, with respect to the base portion 71.

The drill 40 and the syringe 50 are disposed on the substrate 11 in parallel with each other such that the drill bit 41 and the injection needle 51 are at the same height from the support portions 70 and 70, and a distance between their centers is a predetermined interval T. Moreover, the drill 40 and the syringe 50 are supported to be movable to a position at which tips of the drill 40 and the syringe 50 can enter the cap 110 up to a predetermined depth, along with sliding of the holding portion 72 with respect to the base portion 71. Note that as shown in FIG. 5, for example, "predetermined depth" refers to a depth of the top face portion 111 of the cap 110 that can be in communication with the first space S1 defined by the inner seal 115 and the outer seal 114 of the cap 110, and the circumferential edge portion of the mouth portion 101.

That is, the support portion 70 constitutes a second support portion that supports the drill 40 and the syringe 50 to be relatively movable in the Y direction orthogonal to the X direction in a horizontal plane, at least between a drilling position at which the drill bit 41 drills a first hole 116 in the cap 110, and an injection position at which the injection needle 51 injects a dye into the first hole 116, and a separation position at which the drill bit 41 and the injection needle 51 are separated from the cap 110.

The drill 40 may be electric or manual, and the drill bit 41 need only form a hole having a size of about 1.0 mm in the cap 110. The syringe 50 need only include a syringe that contains a dye 52 in an amount of about several cc to several tens of cc.

A receiving pan 12 is placed on the substrate 11 below the drill 40 and the syringe 50, the receiving pan 12 receiving shavings of the cap 110 produced by the drill bit 41 and the dye 52 that drops from the injection needle 51.

Portions such as the base portion 21, the cap fixing portion 22, the pressing table 24, the rail guides 28 and 28, the support portion 60, the base portions 61 and 61, the rails 62 and 62, the positioning member 63, the support portions 70 and 70, and the receiving pan 12 that are included in the auxiliary apparatus 10 are obtained by cutting metal such as aluminum or stainless steel as appropriate, and they are fastened by screws or the like as appropriate.

Next, a method for inspecting the sealing performance of the container according to the present invention will be described.

The inspection method includes a first drilling step of forming, in the top face portion 111 of the cap 110 screwed on the mouth portion 101 of the container 100 that has been left for at least 16 hours in an environment of approximately 15°C after filling with liquid, the first hole 116 having a diameter of about 1.0 mm that is in communication with the first space S1 defined by the inner seal 115 and the outer seal 114 of the cap 110, and the circumferential edge portion of the mouth portion 101, a first injecting step of injecting the dye 52 into the first space S1 via the first hole 116, a first leaving step of leaving the container 100 as one example of a first pressurizing step of applying an internal pressure to the cap 110 of the container 100 into which the dye 52 has been injected in the first injecting step, a first checking step of checking whether or not the dye 52 leaks into the container 100 after the first leaving step, and an evaluating step of evaluating the sealing performance based on a checking result of the first checking step.

According to the above-described auxiliary apparatus 10, the first drilling step and the first injecting step of the inspection method according to the present invention can be executed without requiring skills.

That is, after the container 100 is held by the holding portion 20, the container 100 held by the holding portion 20 is brought to face the drill 40 and the drill 40 is moved to the container 100 along the Y direction shown in FIG. 1 to form the first hole 116 (see FIG. 5) having a predetermined depth at a predetermined position of the top face portion 111 (see FIG. 5) of the cap 110 of the container 100 with the drill bit 41, executing the first drilling step. After the drill 40 is moved backward from the container 100 along the Y direction shown in FIG. 1, next, the container 100 is moved along the X direction shown in FIG. 1 to a position at which the container 100 faces the syringe 50, the syringe 50 is moved to the container 100 along the Y direction to inject, with the injection needle 51, a predetermined amount of the dye 52 into the first hole 116 formed with the drill bit 41, executing the first injecting step.

The first leaving step is a step of leaving, in a state in which the cap 110 is inverted so as to become the bottom surface, the container 100 that has not undergo the first applying step or the container 100 that has undergone the first applying step, for three days under predetermined conditions in an environment of approximately 5°C, for example.

Note that a leaving time in the first leaving step is not limited to three days, and may be a period of time such as several seconds to tens of hours that have been set in advance, for example, as an appropriate period of time that is long enough from the start of the first leaving step to check for leakage, or rather than being set in advance such as the time, may be a period of time starting from the start of the first leaving step to the time at which the leakage is confirmed.

The first checking step is a step of checking whether or not the leakage of the dye 52 is recognized in the container 100 that has undergone the first leaving step. That is, if the liquid in the container 100 is the color of the dye 52, it is confirmed that leakage is recognized, whereas if not, it is confirmed that leakage is not recognized.

The evaluating step is a step of evaluating the sealing performance of the container 100 based on a result of the first checking step. If leakage of the dye 52 is not recognized in the first checking step, it can be understood that at least the inner seal 115 has sealing performance, whereas if leakage of the dye 52 is recognized, it can be understood that at least the inner seal 115 does not have sealing performance.

Note that the first pressurizing step may include a first applying step of applying a predetermined external force to the container 100, instead of the first leaving step, or between the first injecting step and the first leaving step.

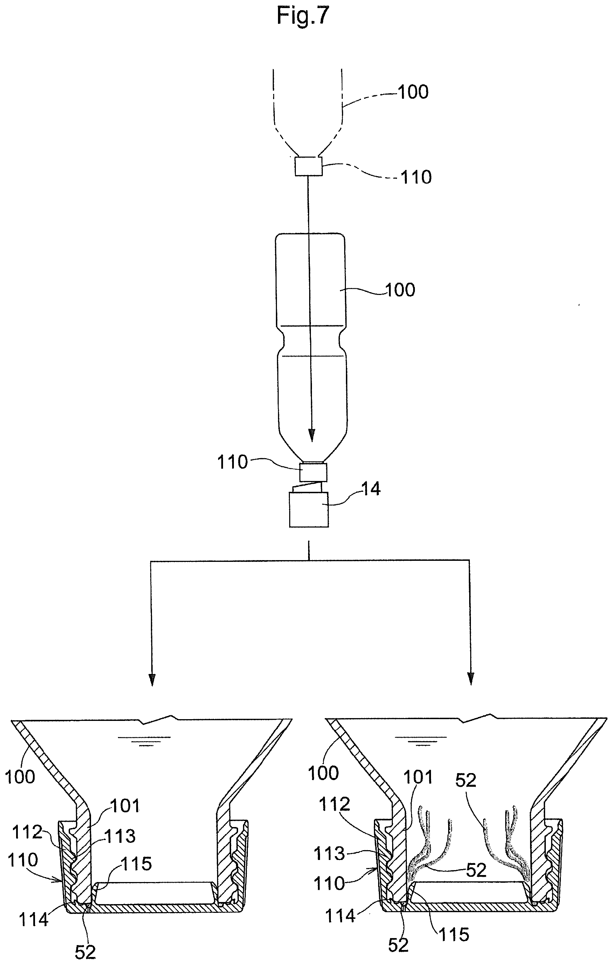

As shown in FIG. 7, the first applying step is a step of dropping the container 100 that has undergone the first injecting step from a predetermined height, with the cap 110 facing downward, and bringing the container 100 to collide with a top face portion, for example, the top face portion of a metal ingot 14 having an inclined surface that is inclined at 10 degrees. Note that the predetermined height is set to a preferred height in advance depending on the size of the container 100. If the container 100 is a PET bottle having a volume of 600 mL or less, the predetermined height is preferably about 1.0 m, whereas if the container 100 is a PET bottle having a volume of more than 600 mL such as a 1.0 L or 2.0 L-large volume PET bottle, about 0.5 m is preferably adopted. The first applying step is performed to improve the reliability of inspection results, assuming impact when a PET bottle drink is dropped from a product stocker to a product removal port, in a situation in which the PET bottle drink is sold in a vending machine.

As described above, it is possible to reliably evaluate the sealing performance of the mouth portion 101 of the container 100 such as a newly designed PET bottle, and the inner seal 115 included in the cap 110 that is screwable on the mouth portion 101, in a state in which the inside of the container 100 is filled with a liquid that serves as the product. Note that the number of containers 100 is not limited to one, and may be greater than one. If there are a plurality of newly-designed patterns, one or more containers 100 may be prepared for each of the patterns.

Next, another embodiment of the present invention will be described.

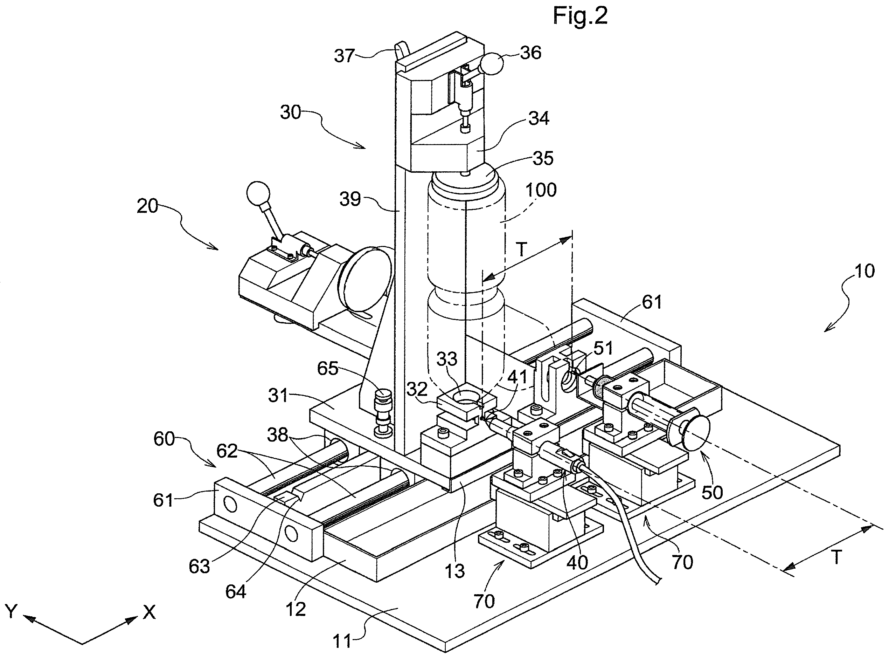

FIG. 2 shows an auxiliary apparatus 10 according to a second embodiment of the present invention.

The same reference numerals are given to configurations that are the same as those of the auxiliary apparatus 10 according to the above-described first embodiment, and description thereof is omitted.

The auxiliary apparatus 10 according to this second embodiment further includes, alongside the holding portion 20 of the auxiliary apparatus 10 according to the first embodiment shown in FIG. 1, a holding portion 30 that holds a container 100 at a perpendicular orientation such that a tubular portion 112 of a cap 110 faces the drill bit 41 or the injection needle 51. Note that the holding portion 20 and the holding portion 30 are integrally fixed by a cross-sectionally L-shaped stay 13. That is, the stay 13 constitutes a fixing portion that fixes the holding portion 20 and the holding portion 30 in parallel with each other along the X direction at a predetermined interval T.

The holding portion 30 includes, on a front upper surface of a flat-plated base portion 31, a cap fixing portion 32 into which the cap 110 is insertable such that a top face portion 111 of the cap 110 of the container 100 faces downward, a rising portion 39 that is disposed upright on a central upper surface of the base portion 31, a pressing table 34 provided with a pressing portion 35 that can press the bottom surface of the container 100 downward, in an upper potion of the rising portion 39, and on a back surface of the base portion 31, a pair of rail guides 38 and 38 for moving along a pair of rails 62 and 62, and the like.

That is, the holding portion 30 constitutes a second holding portion in order to hold the container 100 at a perpendicular orientation such that the top face portion 111 of the cap 110 faces the drill bit 41 or the injection needle 51.

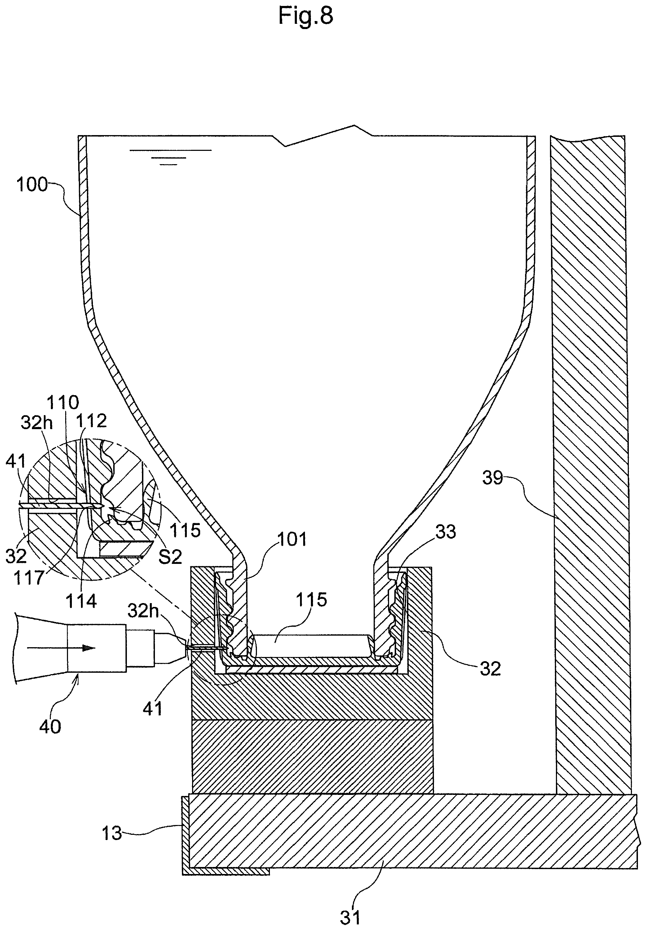

The cap fixing portion 32 includes a cap fixing hole 33 into which the cap 110 is insertable from above, and a guide hole 32h (see FIG. 8) at a position corresponding to a predetermined position of the cap 110 that is inserted into the cap fixing hole 33. The drill bit 41 and the injection needle 51 are reliably guided with the guide hole 32h at a predetermined position of the cap 110.

Note that as shown in FIG. 8, for example, "predetermined position of the cap 110" refers to a position of a tubular portion 112 of the cap 110 that can be in communication with a second space S2 defined by at least an outer seal 114 of the cap 110, an inner circumferential surface of the tubular portion 112, and an outer circumferential portion of the mouth portion 101.

A long hole that passes through the front and back of the rising portion 39 along a perpendicular direction is formed at an upper center of the rising portion 39, and the pressing table 34 is linked with a movement lever 37 that is arranged on a back surface of the rising portion 39 via a stud bolt that is inserted into the long hole. If the stud bolt is loosen by rotating the movement lever 37, the pressing table 34 can move along the vertical direction with respect to the rising portion 39, and if the stud bolt is fastened by rotating the movement lever 37, the pressing table 34 is fixed to the rising portion 39. The distance between the pressing table 34 and the cap fixing portion 32 can be changed in accordance with the size of the container 100 that is held.

The pressing table 34 is provided with a pressing portion 35 that can move along the vertical direction, in response to an operation of a pressing lever 36. After the pressing table 34 is lowered to an appropriate position with respect to the container 100 in which the cap 110 has been inserted into the cap fixing portion 32 and is fixed thereto, the pressing lever 36 is operated to press the bottom portion of the container 100 toward the cap 110 with the pressing portion 35, as a result of which the container 100 is reliably held between the cap fixing portion 32 and the pressing table 34.

V-shaped locking notches 64, 64, and 64 are formed on a top face of the positioning member 63 that is arranged between the pair of rails 62 and 62 at three locations that are spaced from each other at a predetermined interval T.

The locking pin 65 having a lower end portion 66 that can be locked to the locking notches 64, 64, and 64 is disposed upright at a position corresponding to the positioning member 63 of the base portion 31. In this case, the base portion 21 need not include the locking pin 65.

The holding portion 20 faces the drill 40 at a position at which the locking pin 65 locks to a left locking notch 64, the holding portion 20 faces the syringe 50 and the holding portion 30 faces the drill 40 at a position at which the locking pin locks to a central locking notch 64, and the holding portion 30 faces the syringe 50 at a position at which the locking pin 65 locks to a right locking notch 64.

Portions such as the stay 13, the base portion 31, the cap fixing portion 32, the pressing table 34, the rail guides 38 and 38, and the rising portion 39 that are included in the auxiliary apparatus 10 are obtained by cutting metal such as aluminum or stainless steel as appropriate, and they are fastened by screws or the like as appropriate.

According to the auxiliary apparatus 10 configured as described above, in addition to the steps of the above-described inspection method, in an inspection method according to the present invention including a second drilling step of forming, in a tubular portion 112 of the cap 110 that is screwed on a mouth portion 101 of a container 100 that has been left in an environment of approximately 15°C for at least 16 hours after the container 100 is filled with a liquid, and that is different from the container 100 in which a dye is injected into a first space, a second hole 117 that has a diameter of about 1.0 mm and is in communication with a second space S2 defined by at least an outer seal 114 of the cap 110, an inner circumferential surface of the tubular portion 112, and an outer circumferential portion of the mouth portion 101, a second injecting step of injecting the dye 52 into the second space S2 via the second hole 117, a second leaving step of leaving the container 100 as one example of a second pressurizing step of applying an internal pressure to the cap 110 of the container 100 into which the dye 52 has been injected in the second injecting step, a second checking step of checking whether or not the dye 52 leaks in the container 100 after the second leaving step, and an evaluating step of evaluating the sealing performance based on checking results of the second checking step, the second drilling step and the second injecting step can be further executed without requiring skills.

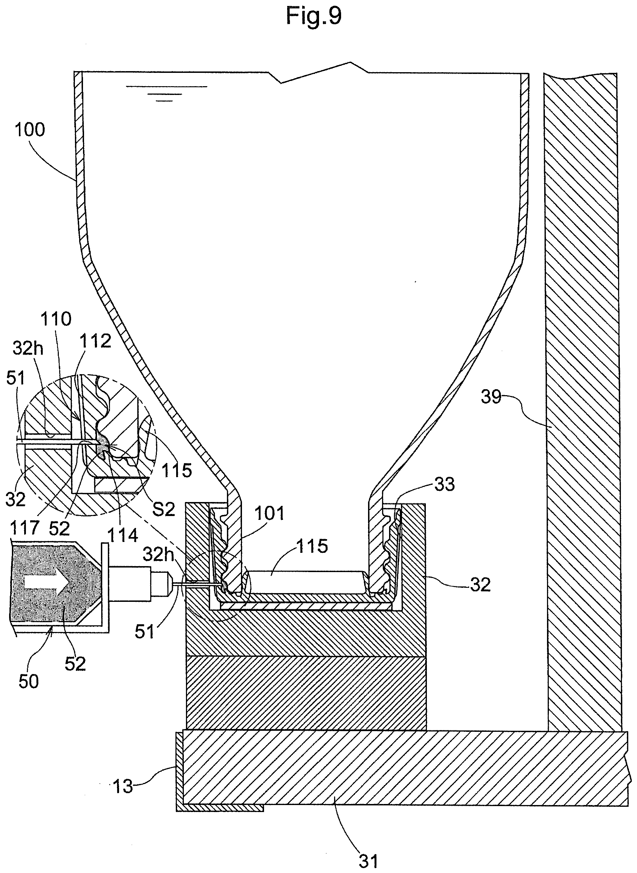

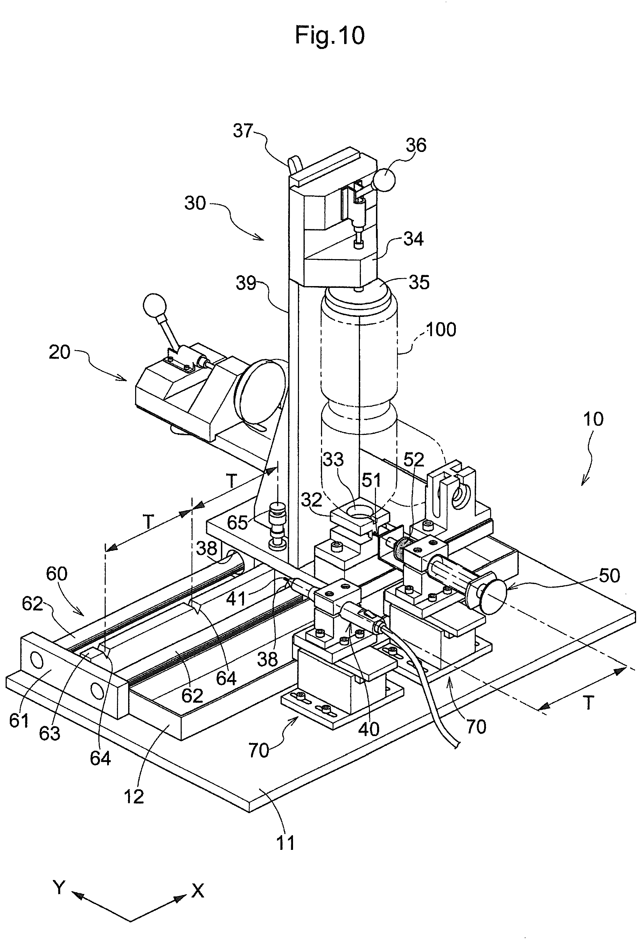

That is, the second drilling step is executed by, after the container 100 is held by the holding portion 30, bringing the container 100 held by the holding portion 30 to face the drill 40, moving the drill 40 to the container 100 along the Y direction shown in FIG. 2, and forming the second hole 117 (see FIG. 9) having a predetermined depth at a predetermined position of the tubular portion 112 (see FIG. 9) of the cap 110 of the container 100 with the drill bit 41, and the second injecting step is executed by, after moving the drill 40 backward from the container 100 along the Y direction shown in FIG. 2, next moving the container 100 along the X direction shown in FIG. 10 to a position at which the container 100 faces the syringe 50, moving the syringe 50 to the container 100 along the Y direction, and injecting, with the injection needle 51, a predetermined amount of the dye 52 into the second hole 117 formed with the drill bit 41.

Moreover, the inspection method according to the present invention includes a second leaving step of leaving the container 100 into which the dye 52 has been injected in the second injecting step, and a second checking step of checking whether or not the dye 52 leaks into the container 100 after the second leaving step, and in the evaluating step, the sealing performance is evaluated based on checking results of the first checking step and the second checking step. Note that in the second leaving step, processing similar to that in the first leaving step is executed. Thus, similarly to the leaving time in the first leaving step, a leaving time in the second leaving step may be a period of time such as several seconds to tens of hours that have been set in advance, for example, as an appropriate period of time that is long enough from the start of the second leaving step to check for leakage, or rather than being set in advance such as the time, may be a period of time starting from the start of the second leaving step to the time at which the leakage is confirmed. In the second checking step, processing similar to that in the first checking step is executed.

Note that if the first pressurizing step includes the first applying step, the second pressurizing step may includes a second applying step of applying a predetermined external force to the container 100, between the second injecting step and the second leaving step. In the second applying step, processing similar to that in the first applying step shown in FIG. 7 is executed.

In the evaluating step, it is possible to evaluate the sealing performance of the container 100 based on results of the first checking step and the second checking step. If leakage of the dye 52 is not recognized in the first checking step, it can be understood that at least the inner seal 115 has sealing performance, whereas if leakage of the dye 52 is recognized, it can be understood that at least the inner seal 115 does not have sealing performance. Moreover, in the case where it is confirmed in the first checking step that the inner seal 115 does not have sealing performance, if leakage of the dye 52 is not recognized in the second checking step as well, it can be understood that the outer seal 114 has sealing performance, whereas if leakage of the dye 52 is recognized in the second checking step as well, it can be understood that the outer seal 114 does not have sealing performance.

As described above, in addition to the inspection of the sealing performance of the mouth portion 101 of the container 100 such as a newly designed PET bottle and the inner seal 115 included in the cap 110 that is screwable on the mouth portion 101, it is possible to inspect the sealing performance of the mouth portion 101 and the outer seal 114. Note that the number of containers 100 in which the first hole that is in communication with the first space is formed and the number of containers 100 in which the second hole that is in communication with the second space is formed are each not limited to one, and each may be greater than one. If there are a plurality of newly designed patterns, one or more containers may be prepared for each of the patterns. Also, the number of containers 100 in which the first hole that is in communication with the first space is formed and the number of containers 100 in which the second hole that is in communication with the second space is formed may be the same or different from each other.

Although the container 100 filled with a liquid that is the content by hot-pack filling has been described as an example in the above description, the container 100 may be filled with a liquid that is the content by aseptic filling in which the liquid is subjected to high temperature sterilization and is cooled in advance, and then filling is performed in a sterile state at room temperature. Also, although the case where the container 100 is a PET bottle has been described as an example, the container 100 is not limited to a PET bottle, and may be made of metal such as aluminum or steel. The cap 110 of the container 100 is also not limited to a one-piece cap that is integrally molded with a resin, may be a two-piece cap in which a seal main body in which the inner seal and the outer seal are integrally molded with a resin is arranged on an inner surface of a cap main body, or may have a configuration in which a seal main body in which the inner seal and the outer seal are integrally molded with a resin is arranged on the inner surface of a cap main body made of metal such as aluminum or steel.

### Description of Reference Signs

10: Auxiliary apparatus
20: First holding portion (holding portion)
30: Second holding portion (holding portion)
40: Drill
41: Drill bit (drilling portion)
50: Syringe
51: Injection needle (injection portion)
52: Dye
60: First support portion
63: Positioning portion
64: Locking notch
65: Locking pin
70: Second support portion
100: Container
101: Mouth portion
110: Cap
111: Top face portion
112: Tubular portion
114: Outer seal (seal)
115: Inner seal (seal)
116: First hole
117: Second hole
S1: First space
S2: Second space
T: Predetermined interval
X: First direction
Y: Second direction

## Claims

1. A method for inspecting a sealing performance of
a mouth portion (101) of a container (100) filled with a liquid, and
a cap (110) including a top face portion (111), a tubular portion (112) that extends downward from a circumferential edge of the top face portion (111) and has an inner circumferential surface provided with a thread portion (113) for screwing on an outer circumferential surface of the mouth portion (101), a resin outer seal (114) that is formed on an inner surface of the top face portion (111) and comes into contact with the outer circumferential surface of the mouth portion (101), and a resin inner seal (115) that is formed on the inner surface of the top face portion (111) and comes into contact with the inner circumferential surface of the mouth portion (101),
the inspection method comprising:
a first drilling step of forming, in the top face portion (111) included in the cap (110) screwed on the mouth portion (101) of the container (100), a first hole (116) that is in communication with a first space (S1) defined by a circumferential edge portion of the mouth portion (101) and the inner seal (115) and the outer seal (114) that are included in the cap (110);
a first injecting step of injecting a dye into the first space (S1) via the first hole (116);
a first pressurizing step of applying an internal pressure to the cap (110) of the container (100) into which the dye has been injected in the first injecting step;
a first checking step of checking whether or not the dye leaks into the container (100) after the first pressurizing step; and
an evaluating step of evaluating the sealing performance based on a checking result of the first checking step.

2. The inspection method according to claim 1, comprising:
a second drilling step of forming, in a tubular portion (112) included in a cap (110) screwed on a mouth portion (101) of another container (100) that is different from the container (100), a second hole (117) that is in communication with a second space (S2) defined by at least an outer seal (114) and an inner circumferential surface of the tubular portion (112) that are included in the cap (110) and an outer circumferential portion of the mouth portion (101);
a second injecting step of injecting a dye into the second space (S2) via the second hole (117);
a second pressurizing step of applying an internal pressure to the cap (110) of the other container (100) into which the dye has been injected in the second injecting step; and
a second checking step of checking whether or not the dye leaks into the other container (100) after the second pressurizing step,
wherein in the evaluating step, the sealing performance is evaluated based on checking results of the first checking step and the second checking step.

3. The inspection method according to claim 1, wherein
the first pressurizing step includes at least a first leaving step of leaving the container (100) in a state in which the container (100) is inverted, or a first applying step of applying a predetermined external force to the container (100).

4. The inspection method according to claim 2, wherein
the first pressurizing step includes at least a first leaving step of leaving the container (100) in a state in which the container (100) is inverted, or a first applying step of applying a predetermined external force to the container (100), and
the second pressurizing step includes at least a second leaving step of leaving the other container (100) in a state in which the other container (100) is inverted, or a second applying step of applying a predetermined external force to the other container (100).

5. The inspection method according to any one of claims 1 to 4, wherein
each container (100) is filled with the liquid by hot-pack filling.

6. An auxiliary apparatus (10) for executing the first drilling step and the first injecting step that are included in the inspection method according to claim 1 or 3, the apparatus comprising:
a holding portion that holds the container (100) that is filled with the liquid;
a drilling portion (41) that forms a hole having a predetermined depth in the cap (110) that is screwed on the mouth portion (101) of the container (100) held by the holding portion and includes the top face portion (111), the tubular portion (112) that extends downward from the circumferential edge of the top face portion (111) and has the inner circumferential surface provided with the thread portion (113) for screwing on the outer circumferential surface of the mouth portion (101), the resin outer seal (114) that is formed on the inner surface of the top face portion (111) and comes into contact with the outer circumferential surface of the mouth portion (101), and the resin inner seal (115) that is formed on the inner surface of the top face portion (111) and comes into contact with the inner circumferential surface of the mouth portion (101);
an injection portion (51) that is disposed in parallel with the drilling portion (41) and injects a predetermined amount of the dye into the hole;
a first support portion (60) that supports at least the holding portion, or the drilling portion (41) and the injection portion (51) so as to be relatively movable at least between the drilling portion (41) and the injection portion (51) in a first direction that extends along a direction in which the drilling portion (41) and the injection portion (51) are disposed in parallel with each other; and
a second support portion (70) that supports at least the holding portion, or the drilling portion (41) and the injection portion (51) so as to be relatively movable in a second direction orthogonal to the first direction in a horizontal plane, at least between a drilling position at which the drilling portion (41) drills the hole and an injection position at which the injection portion (51) injects the dye into the hole, and a separation position at which the drilling portion (41) and the injection portion (51) are separated from the cap (110),
wherein the holding portion includes a first holding portion (20) that holds the container (100) at a horizontal orientation such that the top face portion (111) included in the cap (110) faces the drilling portion (41) or the injection portion (51), and
the drilling portion (41) is configured to form, in the top face portion (111) included in the cap (110) screwed on the mouth portion (101) of the container (100) held by the first holding portion (20), the first hole (116) that is in communication with the first space (S1) defined by the circumferential edge portion of the mouth portion (101) and the inner seal (115) and the outer seal (114) that are included in the cap (110).

7. The auxiliary apparatus (10) according to claim 6 further for executing the second drilling step and the second injecting step that are included in the inspection method according to claim 2 or 4,
wherein the holding portion further includes:
a second holding portion (30) that holds the other container (100) that is different from the container (100) held by the first holding portion (20) at a perpendicular orientation such that the tubular portion (112) included in the cap (110) faces the drilling portion (41) or the injection portion (51),
the drilling portion (41) is configured to: form, in the tubular portion (112) included in the cap (110) screwed on the mouth portion (101) of the other container (100) held by the second holding portion (30), the second hole (117) that is in communication with the second space (S2) defined by at least the outer seal (114) and the inner circumferential surface of the tubular portion (112) that are included in the cap (110) and the outer circumferential portion of the mouth portion (101).

8. The auxiliary apparatus (10) according to claim 7, wherein
the holding portion includes a fixing portion that fixes the first holding portion (20) and the second holding portion (30) in parallel with each other at a distance that is equal to a distance at which the drilling portion (41) and the injection portion (51) are disposed in parallel with each other, along the first direction.

9. The auxiliary apparatus (10) according to any one of claims 6 to 8, wherein
the first support portion (60) includes a restriction portion that restricts the relative movement of the holding portion in the first direction at a position that faces the drilling portion (41) or a position that faces the injection portion (51).

## Patentansprüche

1. Verfahren zum Testen eines Versiegelungsvermögens
eines Mundabschnitts (101) eines mit einer Flüssigkeit gefüllten Behälters (100) und
einer Kappe (110), die aufweist: einen Deckflächenabschnitt (111), einen rohrförmigen Abschnitt (112), der sich von einer Umfangskante des Deckflächenabschnitts (111) abwärts erstreckt und eine mit einem Gewindeabschnitt (113) versehene Innenumfangsfläche zum Schrauben an eine Außenumfangsfläche des Mundabschnitts (101) hat, ein Harzaußensiegel (114), das an einer Innenfläche des Deckflächenabschnitts (111) gebildet ist und in Kontakt mit der Außenumfangsfläche des Mundabschnitts (101) kommt, und ein Harzinnensiegel (115), das an der Innenfläche des Deckflächenabschnitts (111) gebildet ist und in Kontakt mit der Innenumfangsfläche des Mundabschnitts (101) kommt,
wobei das Testverfahren aufweist:
einen ersten Bohrschritt zum Bilden eines ersten Lochs (116) in dem Deckflächenabschnitt (111), der Bestandteil der auf den Mundabschnitt (101) des Behälters (100) geschraubten Kappe (110) ist, wobei das erste Loch (116) in Verbindung mit einem ersten Raum (S1) ist, der durch einen Umfangskantenabschnitt des Mundabschnitts (101) und das Innensiegel (115) und das Außensiegel (114), die Bestandteil der Kappe (110) sind, definiert ist;
einen ersten Injektionsschritt zum Injizieren eines Farbstoffs in den ersten Raum (S1) durch das erste Loch (116);
einen ersten Druckanwendungsschritt zum Anwenden eines Innendrucks auf die Kappe (110) des Behälters (100), in die in dem ersten Injektionsschritt der Farbstoff injiziert worden ist;
einen ersten Prüfschritt zum Prüfen, ob nach dem ersten Druckanwendungsschritt der Farbstoff in den Behälter (100) sickert; und
einen Evaluierungsschritt zum Evaluieren des Versiegelungsvermögens auf Basis eines Prüfergebnisses des ersten Prüfschritts.

2. Testverfahren nach Anspruch 1, aufweisend:
einen zweiten Bohrschritt zum Bilden eines zweiten Lochs (117) in einem rohrförmigen Abschnitt (112), der Bestandteil einer Kappe (110) ist, die auf einen Mundabschnitt (101) eines anderen Behälters (100) geschraubt ist, der sich von dem Behälter (100) unterscheidet, wobei das zweite Loch (117) in Verbindung mit einem zweiten Raum (S2) ist, der durch mindestens ein Außensiegel (114) und eine Innenumfangsfläche des rohrförmigen Abschnitts (112), die Bestandteil der Kappe (110) sind, und einen Außenumfangsabschnitt des Mundabschnitts (101) definiert ist;
einen zweiten Injektionsschritt zum Injizieren eines Farbstoffs in den zweiten Raum (S2) durch das zweite Loch (117);
einen zweiten Druckanwendungsschritt zum Anwenden eines Innendrucks auf die Kappe (110) des anderen Behälters (100), in die in dem zweiten Injektionsschritt der Farbstoff injiziert worden ist;
einen zweiten Prüfschritt zum Prüfen, ob nach dem zweiten Druckanwendungsschritt der Farbstoff in den anderen Behälter (100) sickert,
wobei in dem Evaluierungsschritt das Versiegelungsvermögen auf Basis von Prüfergebnissen des ersten Prüfschritts und des zweiten Prüfschritts evaluiert wird.

3. Testverfahren nach Anspruch 1, wobei
der erste Druckanwendungsschritt aufweist: mindestens einen ersten Lassenschritt zum Lassen des Behälters (100) in einem Zustand, in dem der Behälter (100) umgekehrt ist, oder einen ersten Anwendungsschritt zum Anwenden einer vorgegebenen externen Kraft auf den Behälter (100).

4. Testverfahren nach Anspruch 2, wobei
der erste Druckanwendungsschritt aufweist: mindestens einen ersten Lassenschritt zum Lassen des Behälters (100) in einem Zustand, in dem der Behälter (100) umgekehrt ist, oder einen ersten Anwendungsschritt zum Anwenden einer vorgegebenen externen Kraft auf den Behälter (100), und
der zweite Druckanwendungsschritt aufweist: mindestens einen zweiten Lassenschritt zum Lassen des anderen Behälters (100) in einem Zustand, in dem der andere Behälter (100) umgekehrt ist, oder einen zweiten Anwendungsschritt zum Anwenden einer vorgegebenen externen Kraft auf den anderen Behälter (100).

5. Testverfahren nach einem der Ansprüche 1 bis 4, wobei jeder Behälter (100) mittels Heißverpackungsfüllen mit der Flüssigkeit gefüllt worden ist.

6. Hilfsvorrichtung (10) zum Durchführen des ersten Bohrschritts und des ersten Injektionsschritts, die Bestandteil des Testverfahrens nach einem Ansprüche 1 bis 3 sind, wobei die Vorrichtung aufweist:
einen Halteabschnitt, der den mit der Flüssigkeit gefüllten Behälter (100) hält;
einen Bohrabschnitt (41), der ein Loch einer vorgegebenen Tiefe in der Kappe (110) bildet, die auf den Mundabschnitt (101) des von dem Halteabschnitt gehaltenen Behälters (100) geschraubt ist und aufweist: den Deckflächenabschnitt (111), den rohrförmigen Abschnitt (112), der sich von der Umfangskante des Deckflächenabschnitts (111) abwärts erstreckt und die mit dem Gewindeabschnitt (113) versehene Innenumfangsfläche zum Schrauben an die Außenumfangsfläche des Mundabschnitts (101) hat, das Harzaußensiegel (114), das an der Innenfläche des Deckflächenabschnitts (111) gebildet ist und in Kontakt mit der Außenumfangsfläche des Mundabschnitts (101) kommt, und das Harzinnensiegel (115), das an der Innenfläche des Deckflächenabschnitts (111) gebildet ist und in Kontakt mit der Innenumfangsfläche des Mundabschnitts (101) kommt;
einen Injektionsabschnitt (51), der parallel zu dem Bohrabschnitt (41) angeordnet ist und eine vorgegebene Menge des Farbstoffs in das Loch injiziert;
einen ersten Trägerabschnitt (60), der mindestens den Halteabschnitt oder den Bohrabschnitt (41) und den Injektionsabschnitt (51) trägt, derart, um in einer ersten Richtung, die sich entlang einer Richtung erstreckt, in der der Bohrabschnitt (41) und der Injektionsabschnitt (51) parallel zueinander angeordnet sind, relativ bewegbar zu sein mindestens zwischen dem Bohrabschnitt (41) und dem Injektionsabschnitt (51); und
einen zweiten Trägerabschnitt (70), der mindestens den Halteabschnitt oder den Bohrabschnitt (41) und den Injektionsabschnitt (51) trägt, derart, um in einer zweiten Richtung, die senkrecht zur ersten Richtung ist, in einer horizontalen Ebene relativ bewegbar zu sein mindestens zwischen einer Bohrposition, in der der Bohrabschnitt (41) das Loch bohrt, und einer Injektionsposition, in der der Injektionsabschnitt (51) den Farbstoff in das Loch injiziert, und einer Separationsposition, in der der Bohrabschnitt (41) und der Injektionsabschnitt (51) von der Kappe (110) separiert sind,
wobei der Halteabschnitt einen ersten Halteabschnitt (20) aufweist, der den Behälter (100) in einer horizontalen Orientierung hält, so dass der Deckflächenabschnitt (111), der Bestandteil der Kappe (110) ist, dem Bohrabschnitt (41) oder dem Injektionsabschnitt (51) zugewandt ist, und
der Bohrabschnitt (41) konfiguriert ist, in dem Deckflächenabschnitt (111), der Bestandteil der Kappe (110) ist, die auf den Mundabschnitt (101) des von dem ersten Halteabschnitt (20) gehaltenen Behälters (100) geschraubt ist, das erste Loch (116) zu bohren, das in Verbindung mit dem ersten Raum (S1) ist, der durch den Umfangskantenabschnitt des Mundabschnitts (101) und das Innensiegel (115) und das Außensiegel (114), die Bestandteil der Kappe (110) sind, definiert ist.

7. Hilfsvorrichtung (10) nach Anspruch 6, ferner zum Durchführen des zweiten Bohrschritts und des zweiten Injektionsschritts, die Bestandteil des Testverfahrens nach Anspruch 2 oder 4 sind,
wobei der Halteabschnitt ferner aufweist:
einen zweiten Halteabschnitt (30), der den anderen Behälter (100), der sich von dem von dem ersten Halteabschnitt (20) gehaltenen Behälter (100) unterscheidet, in einer senkrechten (->vertikalen) Orientierung hält, so dass der rohrförmige Abschnitt (112), der Bestandteil der Kappe (110) ist, dem Bohrabschnitt (41) oder dem Injektionsabschnitt (51) zugewandt ist,
wobei der Bohrabschnitt (41) konfiguriert ist, in dem rohrförmigen Abschnitt (112), der Bestandteil der Kappe (110) ist, die auf den Mundabschnitt (101) des von dem zweiten Halteabschnitt (30) gehaltenen anderen Behälters (100) geschraubt ist, das zweite Loch (117) zu bohren, das in Verbindung mit dem zweiten Raum (S2) ist, der durch mindestens das Außensiegel (114) und die Innenumfangsfläche des rohrförmigen Abschnitts (112), die Bestandteil der Kappe (110) sind, und den Außenumfangsabschnitt des Mundabschnitts (101) definiert ist.

8. Hilfsvorrichtung (10) nach Anspruch 7, wobei
der Halteabschnitt einen Fixierabschnitt aufweist, der den ersten Halteabschnitt (20) und den zweiten Halteabschnitt (30) parallel zueinander fixiert in einem Abstand, der gleich einem Abstand ist, in dem der Bohrabschnitt (41) und der Injektionsabschnitt (51) parallel zueinander angeordnet sind, entlang der ersten Richtung.

9. Hilfsvorrichtung (10) nach einem der Ansprüche 6 bis 8, wobei
der erste Trägerabschnitt (60) einen Beschränkungsabschnitt aufweist, der die relative Bewegung des Halteabschnitts in der ersten Richtung an einer Position, die dem Bohrabschnitt (41) gegenüberliegt, oder einer Position, die dem Injektionsabschnitt (51) gegenüberliegt, beschränkt.

## Revendications

1. Procédé de test de performance d'étanchéité de
une partie d'ouverture (101) d'un récipient (100) rempli d'un liquide, et
un capuchon (110) incluant une partie de surface supérieure (111), une partie tubulaire (112) qui s'étend vers le bas à partir d'un bord circonférentiel de la partie de surface supérieure (111) et a une surface circonférentielle interne dotée d'une partie filetée (113) pour le vissage sur une surface circonférentielle externe de la partie d'ouverture (101), un joint d'étanchéité externe en résine (114) qui est formé sur une surface interne de la partie de surface supérieure (111) et vient en contact avec la surface circonférentielle externe de la partie d'ouverture (101), et un joint d'étanchéité interne en résine (115) qui est formé sur la surface interne de la partie de surface supérieure (111) et vient en contact avec la surface circonférentielle interne de la partie d'ouverture (101),
le procédé de test comprenant :
une première étape de perçage consistant à former, dans la partie de surface supérieure (111) incluse dans le capuchon (110) vissé sur la partie d'ouverture (101) du récipient (100), un premier trou (116) qui est en communication avec un premier espace (S1) défini par une partie de bord circonférentiel de la partie d'ouverture (101) et le joint d'étanchéité interne (115) et le joint d'étanchéité externe (114) qui sont inclus dans le capuchon (110) ;
une première étape d'injection consistant à injecter un colorant dans le premier espace (S1) via le premier trou (116) ;
une première étape de pressurisation consistant à appliquer une pression interne sur le capuchon (110) du récipient (100) dans lequel le colorant a été injecté lors de la première étape d'injection ;
une première étape de vérification consistant à vérifier si le colorant fuit ou non dans le récipient (100) après la première étape de pressurisation ; et
une étape d'évaluation consistant à évaluer la performance d'étanchéité sur la base d'un résultat de vérification de la première étape de vérification.

2. Procédé de test selon la revendication 1, comprenant :
une seconde étape de perçage consistant à former, dans une partie tubulaire (112) incluse dans un capuchon (110) vissé sur une partie d'ouverture (101) d'un autre récipient (100) qui est différent du récipient (100), un second trou (117) qui est en communication avec un second espace (S2) défini par au moins un joint d'étanchéité externe (114) et une surface circonférentielle interne de la partie tubulaire (112) qui sont inclus dans le capuchon (110) et une partie circonférentielle externe de la partie d'ouverture (101) ;
une seconde étape d'injection consistant à injecter un colorant dans le second espace (S2) via le second trou (117) ;
une seconde étape de pressurisation consistant à appliquer une pression interne sur le capuchon (110) de l'autre récipient (100) dans lequel le colorant a été injecté lors de la seconde étape d'injection ; et
une seconde étape de vérification consistant à vérifier si le colorant fuit ou non dans l'autre récipient (100) après la seconde étape de pressurisation,
dans lequel lors de l'étape d'évaluation, la performance d'étanchéité est évaluée sur la vérification des résultats de la première étape de vérification et de la seconde étape de vérification.

3. Procédé de test selon la revendication 1, dans lequel
la première étape de pressurisation inclut au moins une première étape de repos consistant à laisser reposer le récipient (100) dans un état dans lequel le récipient (100) est retourné, ou une première étape d'application consistant à appliquer une force externe prédéterminée sur le récipient (100).

4. Procédé de test selon la revendication 2, dans lequel
la première étape de pressurisation inclut au moins une première étape de repos consistant à laisser reposer le récipient (100) dans un état dans lequel le récipient (100) est retourné, ou une première étape d'application consistant à appliquer une force externe prédéterminée sur le récipient (100), et
la seconde étape de pressurisation inclut au moins une seconde étape de repos consistant à laisser reposer l'autre récipient (100) dans un état dans lequel l'autre récipient (100) est retourné, ou une seconde étape d'application consistant à appliquer une force externe prédéterminée sur l'autre récipient (100).

5. Procédé de test selon l'une quelconque des revendications 1 à 4, dans lequel chaque récipient (100) est rempli du liquide par remplissage par appertisation à chaud.

6. Appareil auxiliaire (10) pour exécuter la première étape de perçage et la première étape d'injection qui sont incluses dans le procédé de test selon la revendication 1 ou 3, l'appareil comprenant :
une partie de maintien qui maintient le récipient (100) qui est rempli du liquide ;
une partie de perçage (41) qui forme un trou ayant une profondeur prédéterminée dans le capuchon (110) qui est vissé sur la partie d'ouverture (101) du récipient (100) maintenu par la partie de maintien et inclut la partie de surface supérieure (111), la partie tubulaire (112) qui s'étend vers le bas à partir du bord circonférentiel de la partie de surface supérieure (111) et a la surface circonférentielle interne dotée de la partie filetée (113) pour le vissage sur la surface circonférentielle externe de la partie d'ouverture (101), le joint d'étanchéité externe en résine (114) qui est formé sur la surface interne de la partie de surface supérieure (111) et vient en contact avec la surface circonférentielle externe de la partie d'ouverture (101), et le joint d'étanchéité interne en résine (115) qui est formé sur la surface interne de la partie de surface supérieure (111) et vient en contact avec la surface circonférentielle interne de la partie d'ouverture (101) ;
une partie d'injection (51) qui est disposée parallèlement à la partie de perçage (41) et injecte une quantité prédéterminée du colorant dans le trou ;
une première partie de support (60) qui supporte au moins la partie de maintien, ou la partie de perçage (41) et la partie d'injection (51) de façon à être relativement mobile au moins entre la partie de perçage (41) et la partie d'injection (51) dans une première direction qui s'étend le long d'une direction dans laquelle la partie de perçage (41) et la partie d'injection (51) sont disposées parallèlement l'une à l'autre ; et
une seconde partie de support (70) qui supporte au moins la partie de maintien, ou la partie de perçage (41) et la partie d'injection (51) de façon à être relativement mobile dans une seconde direction orthogonale à la première direction dans un plan horizontal, au moins entre une position de perçage au niveau de laquelle la partie de perçage (41) perce le trou et une position d'injection au niveau de laquelle la partie d'injection (51) injecte le colorant dans le trou, et une position de séparation au niveau de laquelle la partie de perçage (41) et la partie d'injection (51) sont séparées du capuchon (110),
dans lequel la partie de maintien inclut une première partie de maintien (20) qui maintient le récipient (100) dans une orientation horizontale de telle manière que la partie de surface supérieure (111) incluse dans le capuchon (110) est face à la partie de perçage (41) ou à la partie d'injection (51), et
la partie de perçage (41) est configurée pour former, dans la partie de surface supérieure (111) incluse dans le capuchon (110) vissé sur la partie d'ouverture (101) du récipient (100) maintenu par la première partie de maintien (20), le premier trou (116) qui est en communication avec le premier espace (S1) défini par la partie de bord circonférentiel de la partie d'ouverture (101) et le joint d'étanchéité interne (115) et le joint d'étanchéité externe (114) qui sont inclus dans le capuchon (110).

7. Appareil auxiliaire (10) selon la revendication 6 en outre pour exécuter la seconde étape de perçage et la seconde étape d'injection qui sont incluses dans le procédé de test selon la revendication 2 ou 4,
dans lequel la partie de maintien inclut en outre :
une seconde partie de maintien (30) qui maintient l'autre récipient (100) qui est différent du récipient (100) maintenu par la première partie de maintien (20) dans une orientation perpendiculaire de telle manière que la partie tubulaire (112) incluse dans le capuchon (110) est face à la partie de perçage (41) ou à la partie d'injection (51),
la partie de perçage (41) est configurée pour :
former, dans la partie tubulaire (112) incluse dans le capuchon (110) vissé sur la partie d'ouverture (101) de l'autre récipient (100) maintenu par la seconde partie de maintien (30), le second trou (117) qui est en communication avec le second espace (S2) défini par au moins le joint d'étanchéité externe (114) et la surface circonférentielle interne de la partie tubulaire (112) qui sont inclus dans le capuchon (110) et la partie circonférentielle externe de la partie d'ouverture (101).

8. Appareil auxiliaire (10) selon la revendication 7, dans lequel
la partie de maintien inclut une partie de fixation qui fixe la première partie de maintien (20) et la seconde partie de maintien (30) parallèlement l'une à l'autre à une distance qui est égale à une distance à laquelle la partie de perçage (41) et la partie d'injection (51) sont disposées parallèlement l'une à l'autre, le long de la première direction.

9. Appareil auxiliaire (10) selon l'une quelconque des revendications 6 à 8, dans lequel
la première partie de support (60) inclut une partie de limitation qui limite le mouvement relatif de la partie de maintien dans la première direction à une position qui est face à la partie de perçage (41) ou à une position qui est face à la partie d'injection (51).
